# EUROPEAN PATENT APPLICATION

(11) **EP 3 709 210 A1**
(43) Date of publication of application: **16.09.2020**
(21) Application number: 19209277.3
(22) Date of filing: 14.11.2019
(51) Int. Cl.: G06K 9/00

(54) **IMAGE PROCESSING DEVICE, IMAGE PROCESSING SYSTEM, AND NON-TRANSITORY RECORDING MEDIUM**

(30) Priority: 13.03.2019 US 201916351655
(71) Applicant: Toshiba TEC Kabushiki Kaisha, Shinagawa-ku Tokyo 141-8562 (JP)
(72) Inventor: SAKUMA, Sho, Shinagawa-ku, Tokyo 141-8562 (JP); TOMIZAWA, Hajime, Shinagawa-ku, Tokyo 141-8562 (JP); WATANABE, Hiroshi, Shinagawa-ku, Tokyo 141-8562 (JP)
(74) Representative: Bandpay & Greuter

(57) **Abstract**

According to one embodiment, an image processing device includes a control unit. Using a format selected from a plurality of formats in which a region where an image recognition is performed in image information obtained by reading an image formed on a sheet is defined, the control unit performs the image recognition in a region defined with the format in the image information, and provides an output to confirm whether the image recognition is continued when a result of the image recognition is not good.

## Description

### FIELD

Embodiments described herein relate generally to an image processing device, an image processing system, and a non-transitory recording medium.

### BACKGROUND

In the related art, there is a product in which an image reading device such as a scanner recognizes a character at a position designated on a sheet by an Optical Character Reader (OCR). Such a product requires, before the reading, selecting a format in which the information of the region to be recognized by the OCR is defined in advance. However, characters may not be recognized correctly by the OCR if a user selects a wrong format. As a result, a processing load for unnecessary process may be increased. Such a problem occurs not only in the character recognition by the OCR but also in a recognition of a mark such as a barcode and a QR code (registered trademark).

### BRIEF DESCRIPTION OF THE DRAWINGS

FIG. 1 is a diagram illustrating a configuration of an image processing system according to a first embodiment;
FIG. 2A is a diagram illustrating an example of a form in the first embodiment;
FIG. 2B is a diagram illustrating an example of the form in the first embodiment;
FIG. 3 is a diagram illustrating an example of a form format with regard to the form;
FIG. 4 is a diagram illustrating an example of a form format with regard to the form;
FIG. 5 is a block diagram illustrating a hardware configuration of an image processing device in the first embodiment;
FIG. 6 is a diagram illustrating an example of a standby screen in the first embodiment;
FIG. 7 is a diagram illustrating an example of a setting screen in the first embodiment;
FIG. 8 is a diagram illustrating an example of a first detail setting screen in the first embodiment;
FIG. 9 is a diagram illustrating an example of a second detail setting screen in the first embodiment;
FIG. 10 is a diagram illustrating an example of a waiting screen in the first embodiment;
FIG. 11 is a flowchart illustrating a flow of a first recognition in the first embodiment;
FIG. 12 is a diagram illustrating an example of a first confirmation screen in the first embodiment;
FIG. 13 is a diagram illustrating an example of a recognition result in the first embodiment;
FIG. 14 is a diagram illustrating an example of a second confirmation screen in the first embodiment;
FIG. 15 is a flowchart illustrating a flow of a third recognition in the first embodiment;
FIG. 16 is a diagram illustrating an example of a third confirmation screen in the first embodiment;
FIG. 17 is a flowchart illustrating a flow of a fourth recognition in the first embodiment;
FIG. 18 is a diagram illustrating an example of a fourth confirmation screen in the first embodiment;
FIG. 19 is a diagram illustrating an example of a selection screen in the first embodiment;
FIG. 20 is a diagram illustrating a configuration of an image processing system according to a second embodiment;
FIG. 21 is a block diagram illustrating a hardware configuration of an image processing device in the second embodiment;
FIG. 22 is a sequence diagram illustrating a flow of the process of the image processing system in the second embodiment; and
FIG. 23 is a sequence diagram illustrating a flow of the process of the image processing system in the second embodiment.

### DETAILED DESCRIPTION

In general, according to one embodiment, an image processing device comprises a control unit. Using a format selected from a plurality of formats in which a region where an image recognition is performed in image information obtained by reading an image formed on a sheet is defined, the control unit performs the image recognition in a region defined with the format in the image information, and provides an output to confirm whether the image recognition is continued when a result of the image recognition is not good.

Preferably, the control unit may determine that the result of the image recognition is not good when there is no recognizing target in a designated region.

Preferably, the control unit may evaluate the result of the image recognition according to a reliability of the image recognition.

Preferably, the control unit may determine that the result of the image recognition is not good when the result does not match a regular expression designated with the format.

Preferably, the control unit may display in a display device a confirmation screen containing a content that the format is switched to another format when the result of the image recognition is not good.

Preferably yet, the display of the confirmation screen may include a plurality of options to select any one of switching the format to the another format, continuing the image recognition and ending the image recognition, and
the control unit may perform image recognition of the region designated with the another format when switching to the another format is selected, and displays a result of the image recognition of all the formats where the image recognition is performed in the display device.

Preferably yet, the control unit may display the result of the image recognition of all the formats in the display device, and when a user selects any format, switches the currently used format to the selected format and continues the image recognition.

Preferably, the control unit may determine whether the image recognition is performed on all the regions designated with the format when there is a flag indicating that confirmation of the result of the image recognition is not necessary, and may display the result in the display device whenever the image recognition is performed on the region designated with the format when there is no flag indicating that confirmation of the result of the image recognition is not necessary.

In another exemplary embodiment, there is also provided an image processing system, comprising:
an image reading device configured to generate image information by reading an image formed on a sheet, and
an image processing device configured to acquire the image information generated by the image reading device through a network, to perform image recognition in a region defined with a format in the image information by using the format selected from a plurality of formats in which a region where the image recognition is performed in the obtained image information is defined, and to output a notification for confirming whether the image recognition is continued when the result of the image recognition is not good.

Preferably, the image processing device may determine that the result of the image recognition is not good when there is no recognizing target in a designated region.

Preferably, the image processing device may evaluate the result of the image recognition according to a reliability of the image recognition.

Preferably, the image processing device may determine that the result of the image recognition is not good when the result does not match a regular expression designated with the format.

Preferably, the image processing device may display in a display device a confirmation screen containing a content that the format is switched to another format when the result of the image recognition is not good.

Preferably yet, the display of the confirmation screen may include a plurality of options to select any one of switching the format to the another format, continuing the image recognition and ending the image recognition, and
the image processing device may perform image recognition of the region designated with the another format when switching to the another format is selected, and may display a result of the image recognition of all the formats where the image recognition is performed in the display device.

Preferably yet, the image processing device may display the result of the image recognition of all the formats in the display device, and when a user selects any format, switch the currently used format to the selected format and continue the image recognition.

Preferably yet, the image processing device may determine whether the image recognition is performed on all the regions designated with the format when there is a flag indicating that confirmation of the result of the image recognition is not necessary, and displays the result in the display device whenever the image recognition is performed on the region designated with the format when there is no flag indicating that confirmation of the result of the image recognition is not necessary.

In yet another exemplary embodiment, there is also provided a non-transitory recording medium which is configured to store a computer program to cause a computer to serve as the image processing device according to any one of the preceding embodiments.

Hereinafter, an image processing device, an image processing system, and a non-temporal/non-transitory recording medium according to embodiments will be described with reference to the drawings.

### First Embodiment

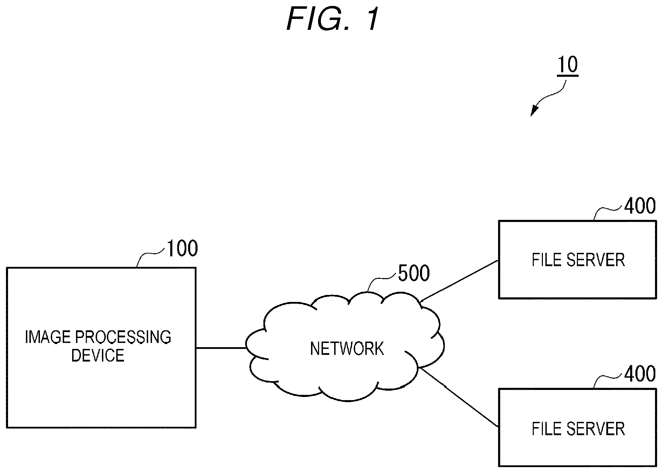

FIG. 1 is a diagram illustrating a configuration of an image processing system 10 according to a first embodiment.

The image processing system 10 includes an image processing device 100 and a file server 400. The image processing device 100 and the file server 400 are connected to communicate with each other through a network 500. The network 500 may be a network with any configurations. For example, the network 500 is a network such as a wireless LAN (Local Area Network) and the Internet.

The image processing device 100 is a multi-function peripheral (MFP) capable of reading a sheet and forming a toner image on a sheet. The sheet is, for example, an original document and a paper sheet on which characters and images are described. A processing target sheet of the embodiment is a sheet of which a format is patterned to some degrees. In other words, the processing target sheet of the embodiment is a sheet in which printing regions of date, item name, item number, price and the like are fixed to some degrees, such as a ledger or a form. In the following description, a form will be exemplified.

In addition, the image processing device 100 includes an image reading device capable of reading a bundle of forms having a plurality of pages. The image reading device is, for example, an auto document feeder (ADF). Further, the image reading device may read an image printed on the reading target form which is set in a document reading table. The image reading device takes the placed forms one by one, reads the image presented on the taken-out form to generate digital data, and generates image information.

In addition, the image processing device 100 includes an OCR function. The image processing device 100 performs character recognition in a specific region on the form by the OCR using the image information generated by the image reading device. Then, the image processing device 100 controls the operation of the character recognition according to a character recognition result. In addition, the image processing device 100 transmits the character recognition result to the file server 400 through the network 500.

The file server 400 is a server which stores the character recognition result transmitted from the image processing device 100. The file server 400 is constituted using an information processing device such as a personal computer.

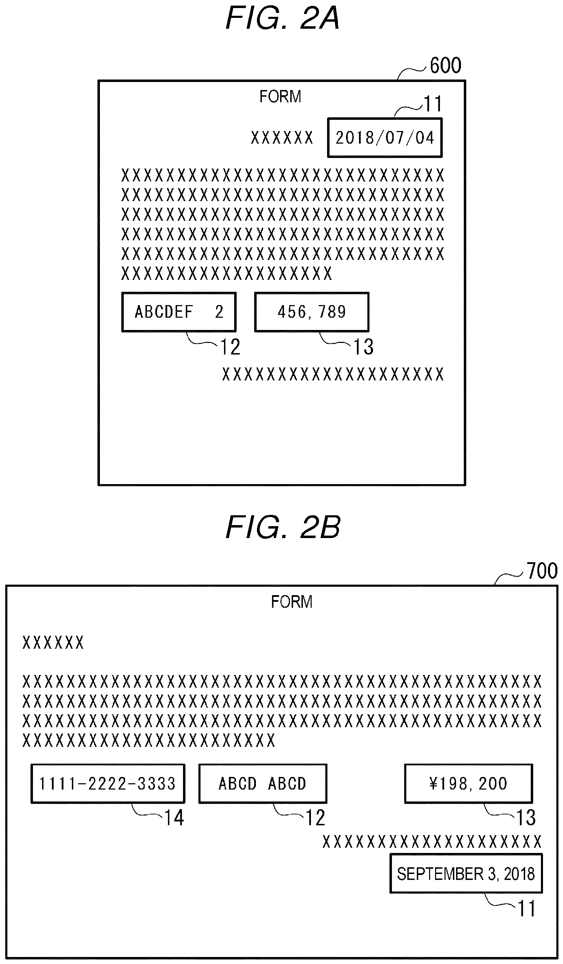

FIGS. 2A and 2B are diagrams illustrating examples of the form in the first embodiment.

In the form, there are a plurality of types such as a form 600 and a form 700. Then, at least any one of a date 11, an item name 12, a price 13, and an item number 14 is described in each of the form 600 and the form 700. Like the form 600 and the form 700, the regions where the date 11, the item name 12, the price 13, and the item number 14 are printed are determined in each format of the form. Although two types of forms are illustrated in FIGS. 2A and 2B, the form is not necessarily limited to the examples of FIGS. 2A and 2B. That is, there may be three or more types of form to be processed.

The image processing device 100 according to the embodiment obtains data by recognizing character strings such as the date 11, the item name 12, the price 13, and the item number 14 described in the form by OCR. Therefore, the image processing device 100 stores, as a form format, the information indicating positions of various types of the forms where the character strings are described.

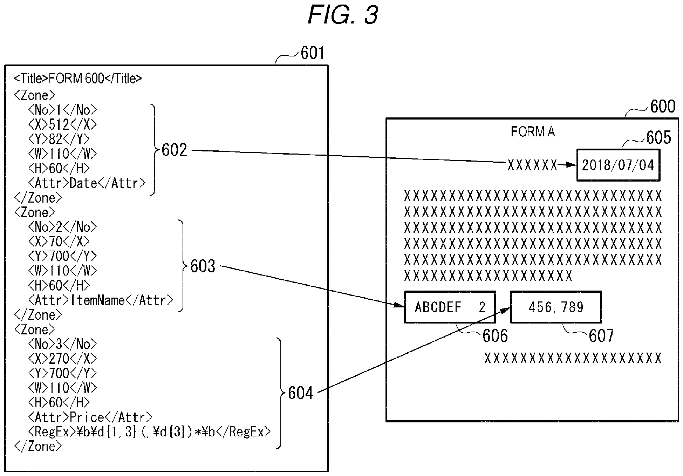

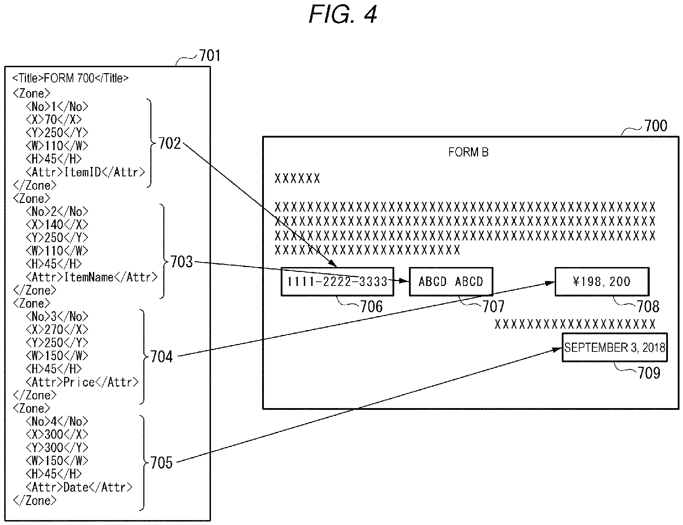

FIG. 3 is a diagram illustrating an example of a form format 601 of the form 600. FIG. 4 is a diagram illustrating an example of a form format 701 of the form 700. The form formats 601 and 701 both are described in an XML (Extensible Markup Language) format.

In the form formats 601 and 701, a plurality of descriptions each designating one region on the sheet from <Zone> to </Zone> are written. In other words, in the form formats 601 and 701, there are the descriptions to designate a plurality of regions on the sheet. For example, in the form format 601, there are descriptions 602, 603 and 604 as descriptions designating the plurality of regions. In addition, in the form format 701, there are descriptions 702, 703, 704 and 705 as descriptions designating the plurality of regions.

The description 602 is a description designating the region where the character string corresponding to the date 11 is written. In other words, the description 602 is a description designating a region 605 of the form 600. The description 603 is a description designating the region where the character string corresponding to the item name 12 is written. In other words, the description 603 is a description designating a region 606 of the form 600. The description 604 is a description designating the region where the character string corresponding to the price 13 is written. In other words, the description 604 is a description designating a region 607 of the form 600.

The description 702 is a description designating the region where the character string corresponding to the item number 14 is written. In other words, the description 702 is a description designating a region 706 of the form 700. The description 703 is a description designating the region where the character string corresponding to the item name 12 is written. In other words, the description 703 is a description designating a region 707 of the form 700. The description 704 is a description designating the region where the character string corresponding to the price 13 is written. In other words, the description 704 is a description designating a region 708 of the form 700. The description 705 is a description designating the region where the character string corresponding to the date 11 is written. In other words, the description 705 is a description designating a region 709 of the form 700.

The image processing device 100 according to the embodiment stores a plurality of form formats as described above, and operates the OCR on the region designated with the stored form format. Further, in the following description, the region described in the form format is described as a Z-th zone (Z is an integer of 1 or more) from above. For example, in the form format 601, the region designated with the description 602 is set to a first zone, and the region designated with the description 604 is set to a third zone.

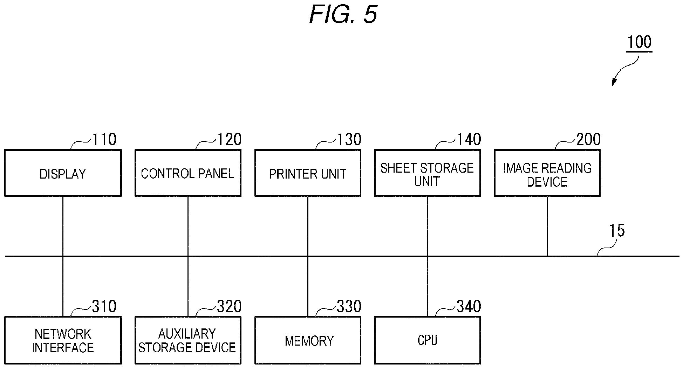

FIG. 5 is a block diagram illustrating a hardware configuration of the image processing device 100 according to the first embodiment.

The image processing device 100 includes a display 110, a control panel 120, a printer unit 130, a sheet storage unit 140, an image reading device 200, a network interface 310, an auxiliary storage device 320, a memory 330, and a CPU 340. Further, the respective functional units are connected to be able to perform data communication through a system bus 15.

The display 110 is an image display device such as a liquid crystal display and an organic electro luminescence (EL) display. The display 110 displays various types of information related to the image processing device 100. In addition, the display 110 outputs a signal corresponding to a user's operation to the central processing unit (CPU) of the image processing device 100. In addition, the display 110 receives a user's operation.

The control panel 120 includes a plurality of buttons. The control panel 120 receives the user's operation. The control panel 120 outputs the signal corresponding to the user's operation to the CPU of the image processing device 100. Further, the display 110 and the control panel 120 may be configured as an integrated touch panel.

The printer unit 130 forms an image. In the image formation, the printer unit 130 forms an image on the sheet based on the image information generated by the image reading device 200 or the image information received through a communication line.

The sheet storage unit 140 accommodates the sheets which are used in the image formation in the printer unit 130.

The image reading device 200 reads a reading target image as brightness and darkness of light. The image reading device 200 records the read image information. The recorded image information is used for the OCR processing. Further, the recorded image information may be transmitted to another information processing device through the network. The recorded image information may be formed as an image on the sheet by the printer unit 130.

The network interface 310 transceives data with another device. Herein, the other device is, for example, the file server 400 or the other image processing device 100. The network interface 310 operates as an input interface, and receives data or an instruction transmitted from the other device. As an instruction transmitted from the other device, there are an instruction of printing and an instruction of storing the image information. In addition, the network interface 310 operates as an output interface, and transmits data to the other device.

The auxiliary storage device 320 is, for example, a hard disk or a solid state drive (SSD) and stores various types of data. Examples of the various types of data include a software program, digital data, a job, a job log, screen data and a form format.

The memory 330 temporarily stores data which is used in the respective functional units included in the image processing device 100. The memory 330 is, for example, a random access memory (RAM). Further, the memory 330 may store the digital data which is generated by the image reading device 200. The memory 330 may temporarily store any one of a job, a job log, and a form format.

The CPU 340 controls the operations of the respective functional units of the image processing device 100. The CPU 340 loads the software program stored in the auxiliary storage device 320 onto the memory 330, and performs the software program to execute the process. Herein, a specific process of the CPU 340 will be described with an example. Using the form format, the CPU 340 performs the OCR on a specific region of the image information generated by the image reading device 200 to recognize the character. Then, the CPU 340 controls the operation of the character recognition according to the character recognition result.

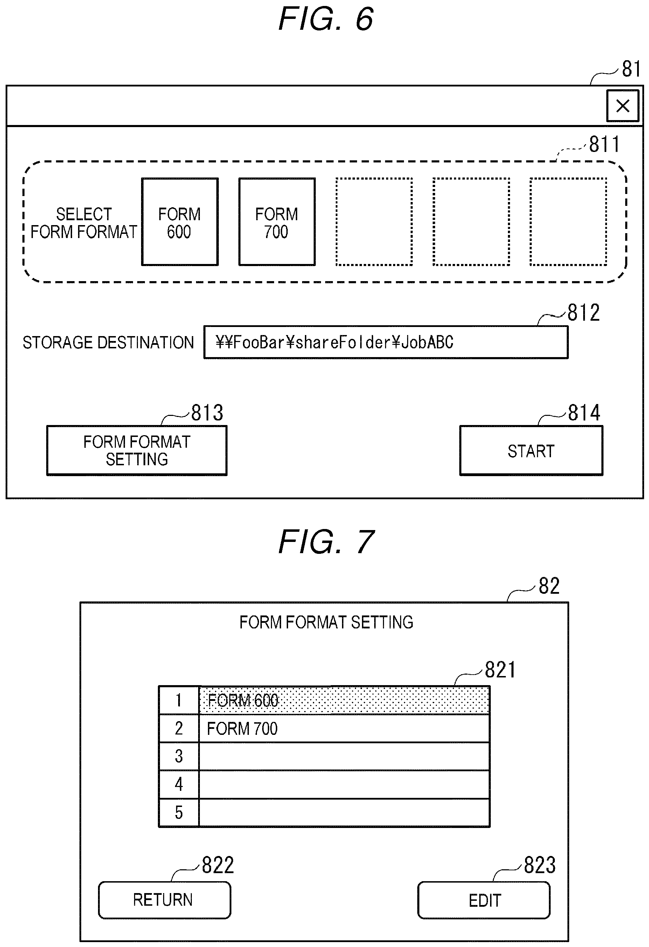

The image processing device 100 displays a standby screen illustrated in FIG. 6 on the display 110 when reading the form, and stands by until an instruction is input by the user.

FIG. 6 is a diagram illustrating an example of the standby screen in the first embodiment.

A standby screen 81 is a screen displayed in the display 110 when the user instructs the reading of the form. In the standby screen 81, a selection region 811, a storage-destination-designating region 812, a form format setting button 813, and a start button 814 are displayed.

The selection region 811 is a region where the user selects the form format used in the OCR. In the selection region 811, the already-registered form format is displayed. In FIG. 6, two form formats of the forms 600 and 700 are displayed.

The storage-destination-designating region 812 is a region to designate a location where the character recognition result is stored after the character recognition of the form is completed. The user can store the character recognition result to a desired location by inputting the desired storage location of the character recognition result to the storage-destination-designating region 812. Further, an input to the storage-destination-designating region 812 may be directly input, or may be directly designated through a pull-down menu.

The form format setting button 813 is a button to register or edit the form format.

The start button 814 is a button to perform the character recognition by the OCR. Further, the CPU 340 may display the start button 814 in an unselectable display mode until the user selects a form format. The unselectable display mode may be, for example, grayed out, or the start button 814 itself may not be displayed.

When the form format setting button 813 is selected by the user, the standby screen 81 switches to a setting screen 82 illustrated in FIG. 7. Specifically, the CPU 340 switches the standby screen 81 displayed in the display 110 to the setting screen 82 to display the setting screen 82.

FIG. 7 is a diagram illustrating an example of the setting screen 82 in the first embodiment.

The setting screen 82 is a screen to be displayed in the display 110 when the form format is registered or edited. The setting screen 82 is displayed in the display 110 by selecting the form format setting button 813. In the setting screen 82, a format setting region 821, a return button 822, and an edit button 823 are displayed.

The format setting region 821 is a region for the user to select a form format which is a registering or editing target. In FIG. 7, two form formats are already set in the format setting region 821, and it is indicated that up to five form formats can be set. When the user registers a form format, the user selects an empty format setting region 821 and selects the edit button 823. In addition, when the user edits a form format, the user selects the set form format and selects the edit button 823.

The return button 822 is a button to return the screen displayed in the display 110 to the previous screen. In other words, the return button 822 in the setting screen 82 is a button to return the setting screen 82 displayed in the display 110 to the standby screen 81. When the return button 822 is selected, the CPU 340 switches the setting screen 82 displayed in the display 110 to the standby screen 81 to display the standby screen 81.

The edit button 823 is a button to set details of the form format.

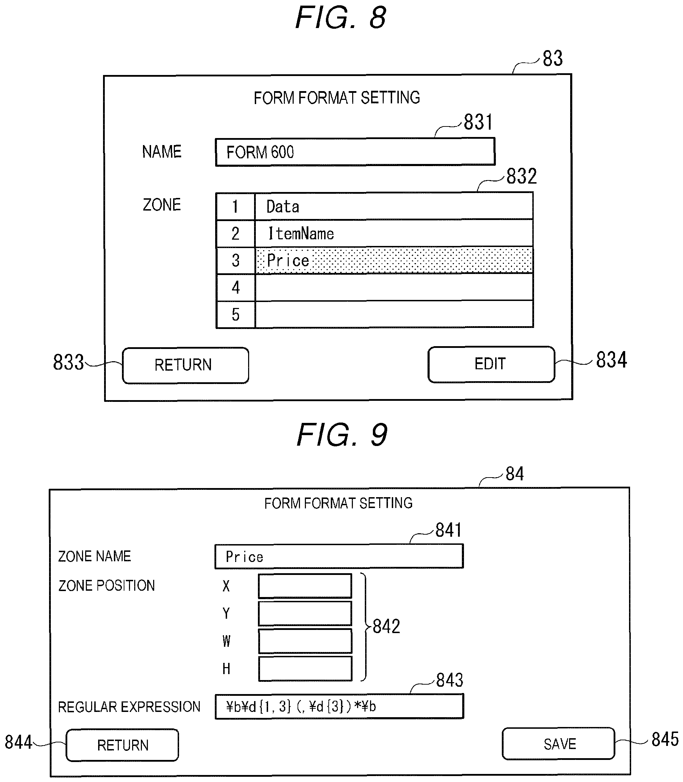

FIG. 7 illustrates a state where the user selects the first form format "form 600". When the user selects the edit button 823 in this state, the setting screen 82 is switched to a first detail setting screen 83 illustrated in FIG. 8. Specifically, the CPU 340 switches the setting screen 82 displayed in the display 110 to the first detail setting screen 83 to display the first detail setting screen 83.

FIG. 8 is a diagram illustrating an example of the first detail setting screen 83 in the first embodiment.

The first detail setting screen 83 is a screen displayed in the display 110 when a setting zone is selected in the form format. The first detail setting screen 83 is displayed in the display 110 by selecting the edit button 823 in the setting screen 82. In the first detail setting screen 83, a name input region 831, an editing zone selecting region 832, a return button 833, and an edit button 834 are displayed.

The name input region 831 is a region for the user to input the name of the form format.

The editing zone selecting region 832 is a region for the user to select a zone which is a registering or editing target. In FIG. 8, three zones are already set in the editing zone selecting region 832, and it is indicated that up to five zones can be set. When the user registers a zone, the user selects an empty editing zone selecting region 832 and selects the edit button 834. In addition, when the user edits a zone, the user selects the set zone and selects the edit button 834.

The return button 833 is a button to return the screen displayed in the display 110 to the previous screen. In other words, the return button 833 in the first detail setting screen 83 is a button to return the first detail setting screen 83 displayed in the display 110 to the setting screen 82. When the return button 833 is selected, the CPU 340 switches the first details setting screen 83 displayed in the display 110 to the setting screen 82 to display the setting screen 82.

The edit button 834 is a button to set the details of a zone.

FIG. 8 illustrates a state where the user selects "Price" in the third zone. When the user selects the edit button 834 in this state, the first detail setting screen 83 is switched to a second detail setting screen 84 illustrated in FIG. 9. Specifically, the CPU 340 switches the first detail setting screen 83 displayed in the display 110 to the second detail setting screen 84 to displays the second detail setting screen 84.

FIG. 9 is a diagram illustrating an example of the second detail setting screen 84 in the first embodiment.

The second detail setting screen 84 is a screen to be displayed in the display 110 when a zone is to be set. The second detail setting screen 84 is displayed in the display 110 by selecting the edit button 834 in the first detail setting screen 83. In the second detail setting screen 84, a zone name inputting region 841, a zone detail setting region 842, a regular expression inputting region 843, a return button 844, and a save button 845 are displayed.

The zone name inputting region 841 is a region for the user to input the name of a zone. The zone detail setting region 842 is a region for the user to set the region of a zone. In the zone detail setting region 842, four items of an X coordinate, a Y coordinate, W (width) and H (height) are set. These four items are input to set one zone. The zone set in the zone detail setting region 842 is a region which is a reading target of the OCR.

The regular expression inputting region 843 is a region in which the data configuration of a zone is described with a regular expression. For example, if the configuration of the character string in the set zone (for example, the configuration of the numerical value N digits and the characters M digits) is designated, it is possible to determine whether the recognition result matches the regular expression. Further, the regular expression inputting region 843 may not be input.

The return button 844 is a button to return the screen displayed in the display 110 to the previous screen. In other words, the return button 844 in the second detail setting screen 84 is a button to return the second detail setting screen 84 displayed in the display 110 to the first detail setting screen 83. When the return button 844 is selected, the CPU 340 switches the second detail setting screen 84 displayed in the display 110 to the first detail setting screen 83 to display the first detail setting screen 83.

The save button 845 is a button to save the form format with the currently input content. The form format is updated and newly registered with the currently input content by selecting the save button 845.

After setting a zone in the second detail setting screen 84, the user selects the save button 845 to save the setting content. Thereafter, the user selects the return button 844 to return to the first detail setting screen 83. When the setting of all the zones are completed by similarly setting the other zones, the user selects the return button 833 in the first detail setting screen 83 to return to the setting screen 82. When the setting of all the form formats in the setting screen 82 is completed, the user selects the return button 822 to return to the standby screen 81. With the above process, the form format is stored in the auxiliary storage device 320.

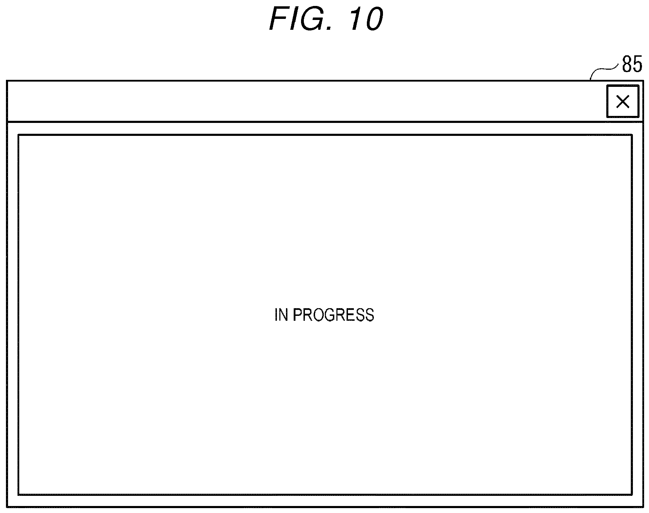

Next, the process when the user selects the start button 814 displayed in the standby screen 81 will be described. When the start button 814 is selected, the standby screen 81 is switched to a waiting screen 85 illustrated in FIG. 10. Specifically, the CPU 340 switches the standby screen 81 displayed in the display 110 to the waiting screen 85 to display the waiting screen 85.

FIG. 10 is a diagram illustrating an example of the waiting screen 85 in the first embodiment.

The waiting screen 85 is a screen which is displayed in the display 110 during the execution of the recognition by the OCR. The waiting screen 85 is displayed in the display 110 by selecting the start button 814. In the waiting screen 85, there is displayed the character string of "In progress" indicating "during the execution" of the recognition by the OCR.

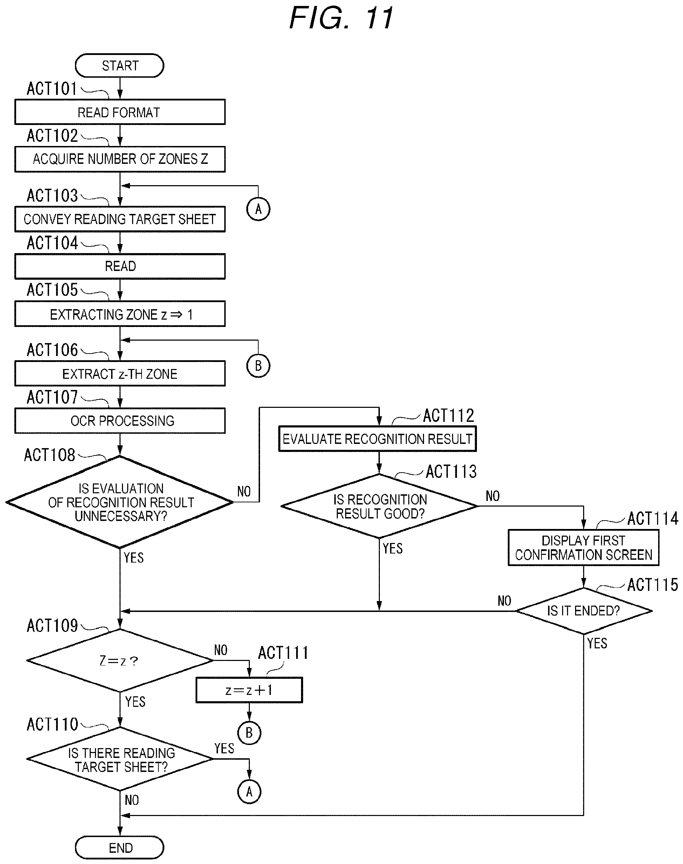

FIG. 11 is a flowchart illustrating a flow of a first recognition in the first embodiment. The process of FIG. 11 is performed when the start button 814 is selected in the standby screen 81.

The CPU 340 reads the form format selected in the standby screen 81 from the auxiliary storage device 320 (ACT 101). For example, when the form 600 is selected in the standby screen 81, the CPU 340 reads the form format of the form 600 from the auxiliary storage device 320.

The CPU 340 acquires the number of zones Z from the read form format (ACT 102). For example, when the form format of the form 600 is read, the CPU 340 calculates the number of zones of the form format in the form 600 and acquires "3" as the number of zones. Next, the CPU 340 causes the image reading device 200 to convey the form of the reading target sheet. The image reading device 200 controls the roller according to an instruction from the CPU 340 to convey one piece of the installed form (ACT 103).

The image reading device 200 optically reads the conveyed form to generate the image information (ACT 104). The image reading device 200 outputs the generated image information to the CPU 340. The CPU 340 initializes an extracting target zone (hereinafter, referred to as "extracting zone") z to 1 (ACT 105). Next, the CPU 340 acquires region information (X coordinate, Y coordinate, W (width), and H (height)) of the first zone from the read form format. From the image information output from the image reading device 200, the CPU 340 extracts information within the region specified by the acquired region information (ACT 106).

The CPU 340 recognizes the information within the extracted region as a character by the OCR (ACT 107). The CPU 340 acquires the character information within the region as a result of the character recognition. The CPU 340 temporarily stores the acquired recognition result in the memory 330. Further, when there is no information within the extracted region, that is, empty, the CPU 340 acquires nothing. The CPU 340 determines whether the evaluation of the recognition result is unnecessary (ACT 108).

Specifically, when a flag indicating that the evaluation of the recognition result is unnecessary (hereinafter, referred to as an "evaluation unnecessary flag") is set, the CPU 340 determines that the evaluation of the recognition result is unnecessary. On the other hand, when the evaluation unnecessary flag is not set, the CPU 340 determines that the evaluation of the recognition result is necessary. The evaluation unnecessary flag is reset at the time of starting the recognition. In addition, the evaluation unnecessary flag is set when the user tries to check the recognition result.

When the evaluation of the recognition result is unnecessary (ACT 108: YES), that is, when the evaluation unnecessary flag is set, the CPU 340 performs ACT 109. The CPU 340 determines whether Z is z (ACT 109). In other words, the CPU 340 determines whether the recognition is performed on one form in all the zones of the form format. When Z is not z, it is indicated that the CPU 340 does not perform the recognition in all the zones of the form format. On the other hand, when Z = z, it is indicated that the CPU 340 performs the recognition in all the zones of the form format.

When Z = z (ACT 109: YES), the CPU 340 determines whether there is a reading target sheet (ACT 110). When there is no reading target sheet (ACT 110: NO), the image processing device 100 ends the process of FIG. 11. On the other hand, when there is a reading target sheet (ACT 110: YES), the CPU 340 instructs the image reading device 200 to convey the next form. The image reading device 200 controls the roller according to the instruction from the CPU 340 to convey one piece of the installed form (ACT 103). Thereafter, the image processing device 100 performs the subsequent processes after ACT 104.

When Z is not z in ACT 109 (ACT 109: NO), the CPU 340 adds 1 to the value of z (ACT 111). If z is 1, the CPU 340 adds 1 to the value of z to make z = 2. Therefore, the CPU 340 acquires the region information of the second zone from the read form format in ACT 106. Further, if z =3, the CPU 340 acquires the region information of the third zone from the read form format in ACT 106.

When the evaluation of the recognition result is necessary in ACT 108 (ACT 108: NO), the CPU 340 performs ACT 112. Specifically, the CPU 340 evaluates the recognition result (ACT 112).

Here, the evaluation method of the recognition result will be described. The CPU 340 performs any one or all of a first method to a third method as the evaluation method of the recognition result to evaluate the recognition result.

As the first method, there is a method of evaluating whether the extracted region is empty. When the region is empty, the character information is not acquired by the OCR. Therefore, the CPU 340 determines that the recognition result is not good. In other words, the CPU 340 determines that the recognition result is not good when there is no image to be recognized within the extracted region and the character information is not acquired (NULL).

As the second method, there is an evaluation method according to a reliability (accuracy) at the time of the OCR process. Specifically, if there is even one suspicious character as a result of the recognition, the CPU 340 determines that the recognition result is not good. As a suspicious character, for example, there is a case where the number "1" and an English letter "1" can be recognized as either one. In addition, when a total ratio of the recognition result is less than a predetermined threshold, the CPU 340 determines that the recognition result is not good.

As the third method, there is a method of evaluating whether the recognition result matches the regular expression when the regular expression is defined in the zone information of the form format. When the regular expression is defined in the zone information of the form format, and the recognition result does not match the regular expression, the CPU 340 determines that the recognition result is not good.

In addition, when it is not determined in any one or all of the first method to the third method described above that the recognition result is not good, the CPU 340 determines that the recognition result is good. Further, a method to be used for the evaluation of the recognition result is set in advance among the first method to the third method.

When the recognition result is good (ACT 113: YES), the CPU 340 performs ACT 109. The CPU 340 determines whether Z is z (ACT 109). Thereafter, the image processing device 100 performs a process according to the determination result of ACT 109.

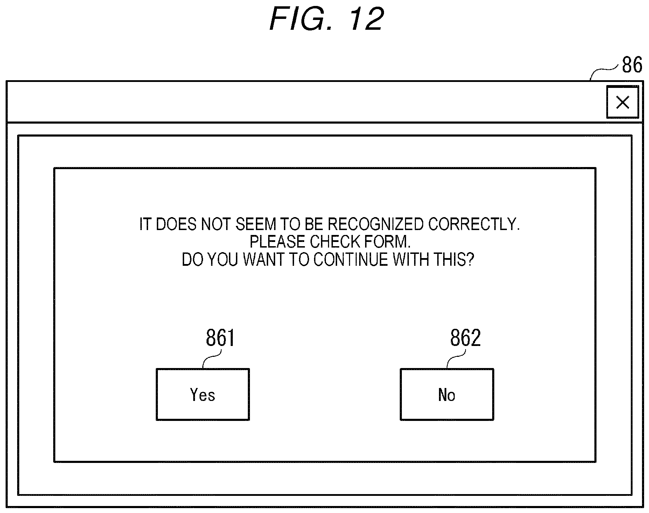

On the other hand, when the recognition result is not good (ACT 113: NO), the form format selected by the user may be wrong. Therefore, there is a possibility that the character recognition is not accurate. Therefore, the CPU 340 displays a first confirmation screen illustrated in FIG. 12 in the display 110 (ACT 114). Specifically, the CPU 340 switches the waiting screen 85 displayed in the display 110 to the first confirmation screen to display the first confirmation screen.

FIG. 12 is a diagram illustrating an example of a first confirmation screen 86 in the first embodiment.

The first confirmation screen 86 is a screen to confirm whether the recognition is continued when the recognition result is not good. In the first confirmation screen 86, a Yes button 861 and a No button 862 are displayed for the notification to the user. As the notification to the user in the first confirmation screen 86, a content is notified to confirm whether the recognition is continued when the recognition result is not good.

The Yes button 861 is a button to be used when the user allows the notified content. In other words, when the Yes button 861 is selected, the CPU 340 determines that the user allows the notified content.

The No button 862 is a button to be used when the user does not allow the notified content. In other words, when the No button 862 is selected, the CPU 340 determines that the user does not allow the notified content.

Returning to FIG. 11, the description will be continued.

The user selects any one of the Yes button 861 and the No button 862 in the first confirmation screen 86 displayed in the display 110. When the user selects any one of the Yes button 862 and the No button 862, the CPU 340 determines whether the recognition is ended (ACT 115). Specifically, when the recognition is not continued in the first confirmation screen, that is, when the No button 862 is selected, the CPU 340 determines that the recognition is ended. On the other hand, when the recognition is continued in the first confirmation screen, that is, when the Yes button 861 is selected, the CPU 340 determines that the recognition is not ended.

When the recognition is ended (ACT 115: YES), the image processing device 100 ends the process of FIG. 11. In this case, the CPU 340 discards the recognition result.

On the other hand, when the recognition is not ended (ACT 115: NO), the CPU 340 switches the first confirmation screen 86 displayed in the display 110 to the waiting screen 85 to display the waiting screen 85. Thereafter, the image processing device 100 performs the subsequent processes after ACT 109.

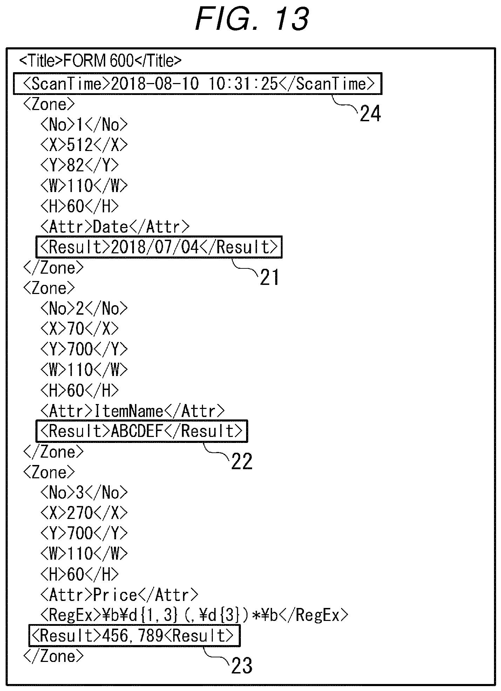

FIG. 13 is a diagram illustrating an example of the recognition result in the first embodiment.

As illustrated in FIG. 13, <Result> tabs 21 to 23 indicating the recognition result are written in a portion between <Zone> to </Zone>. In addition, the date and time when the recognition is performed are written in <ScanTime> tab 24. The CPU 340 describes the recognition result in the region of the corresponding zone. The recognition result illustrated in FIG. 13 is transmitted to the file server 400.

When the recognition result by the OCR is not good, the image processing device 100 configured as above confirms whether the recognition is continued and performs the process corresponding to the confirmed result. With such a confirmation, it is possible to notify the user of a misuse of the wrongly-selected form format. Therefore, the user can switch the form format to a correct one. Therefore, it is possible to reduce a processing load for an unnecessary process.

Hereinafter, a modification of the image processing device 100 in the first embodiment will be described.

In the embodiment, the OCR process is described as the character recognition. However, the technology in the embodiment can be applied to a recognition of a mark such as a barcode or a QR code (registered trademark).

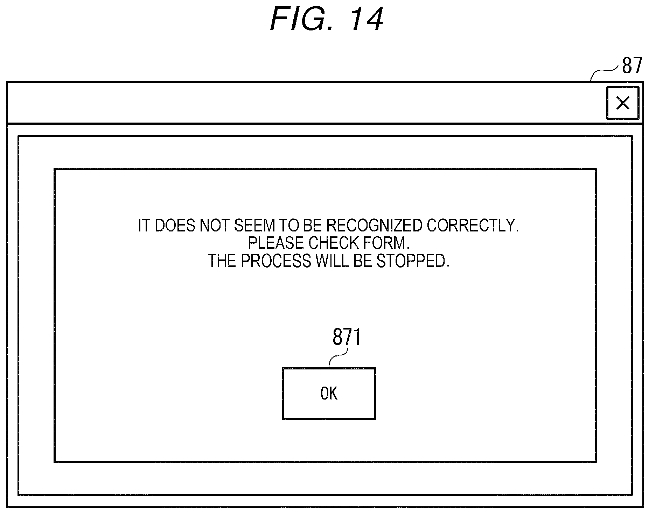

The CPU 340 displays a second confirmation screen illustrated in FIG. 14 instead of the first confirmation screen in the display 110. FIG. 14 is a diagram illustrating an example of a second confirmation screen 87 in the first embodiment.

The second confirmation screen 87 is a screen to confirm whether the recognition is continued when the recognition result is not good. In the second confirmation screen 87, the notification to the user and an OK button 871 are displayed. As a notification to the user in the second confirmation screen 87, a content that the recognition is stopped is notified since the recognition result is not good.

The OK button 871 is a button to be used when the user allows the notified content. In other words, when the OK button 871 is selected, the CPU 340 determines that the user allows the stopping of the recognition, which is the notification content. In this case, as a second recognition in the first embodiment, the CPU 340 determines that the recognition in ACT 115 is ended.

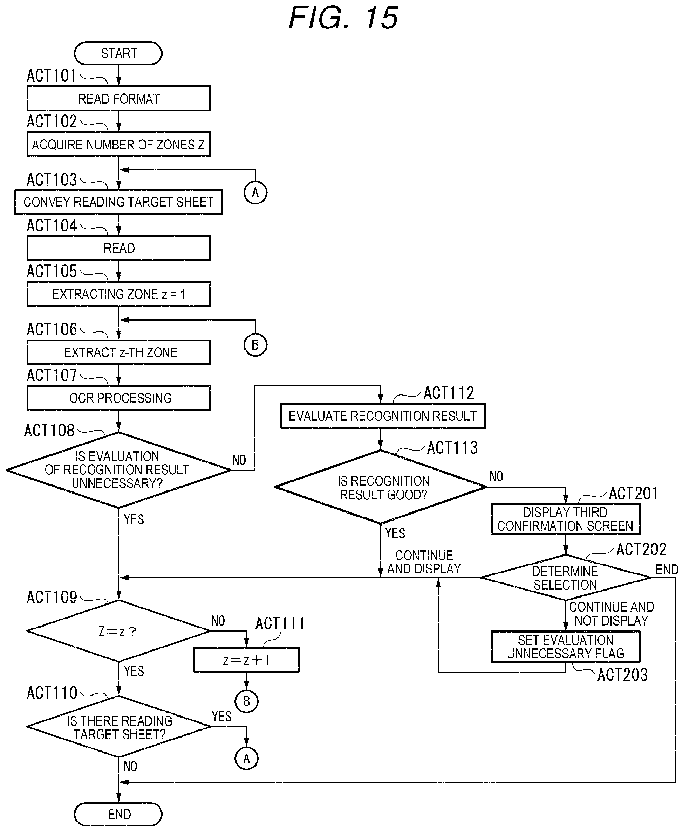

In addition, the image processing device 100 may be configured to perform the recognition illustrated in FIG. 15.

FIG. 15 is a flowchart illustrating a flow of a third recognition in the first embodiment. The process of FIG. 15 is performed when the start button 814 is selected in the standby screen 81. In addition, in FIG. 15, the same processes as those in FIG. 11 are denoted with the same numerals, and the description thereof will be omitted.

When the recognition result is not good in ACT 113 (ACT 113: NO), the form format selected by the user may be wrong. Therefore, there is a possibility that the character recognition is not accurate. Therefore, the CPU 340 displays a third confirmation screen illustrated in FIG. 15 in the display 110 (ACT 201). Specifically, the CPU 340 switches the waiting screen 85 displayed in the display 110 to the third confirmation screen and displays the third confirmation screen.

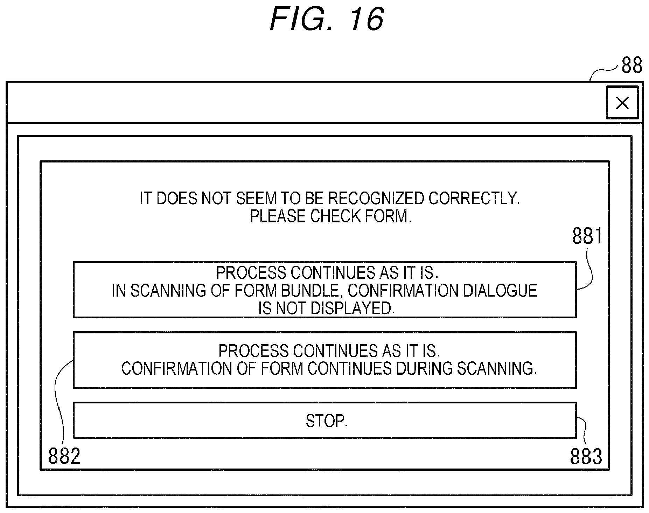

FIG. 16 is a diagram illustrating an example of the third confirmation screen 88 in the first embodiment.

The third confirmation screen 88 is a screen to confirm whether the recognition is continued when the recognition result is not good. In the third confirmation screen 88, the notification to the user and a plurality of selection buttons 881 to 883 are displayed. As a notification to the user in the third confirmation screen 88, a content is notified to confirm whether the recognition is continued when the recognition result is not good.

The selection button 881 is a button to be selected when the recognition is continued but the confirmation screen is not displayed in the recognition.

The selection button 882 is a button to be selected when the recognition is continued and the confirmation screen is displayed.

The selection button 883 is a button to be selected when the recognition is ended.

Returning to FIG. 15, the description will be continued.

The user selects any one of the selection buttons 881 to 883 in the third confirmation screen 88 displayed in the display 110. The CPU 340 determines a process corresponding to the selected button when the user selects any one of the selection buttons 881 to 883 (ACT 202). When the selection button 883 is selected, the CPU 340 determines that the recognition is ended (ACT 202: END). In this case, the image processing device 100 ends the process of FIG. 15. Then, the CPU 340 discards the recognition result.

In addition, when the user selects the selection button 882, the CPU 340 continues the recognition and determines to display the confirmation screen (ACT 202: Continue and Display). The CPU 340 switches the third confirmation screen 88 displayed in the display 110 to the waiting screen 85 to display the waiting screen 85. Thereafter, the image processing device 100 performs the subsequent processes after ACT 109.

In addition, when the user selects the selection button 881, the CPU 340 continues the recognition but determines not to display the confirmation screen in the recognition (ACT 202: Continue and Not Display). In this case, the CPU 340 sets the evaluation unnecessary flag (ACT 203). The CPU 340 switches the third confirmation screen 88 displayed in the display 110 to the waiting screen 85 to display the waiting screen 85. Thereafter, the image processing device 100 performs the subsequent processes after ACT 109.

According to the image processing device 100 configured as above, when the recognition result by the OCR is not good, it is confirmed whether the recognition is continued, and the process corresponding to the confirmed result is performed. At this time, the image processing device 100 can select whether the confirmation screen is displayed even when the recognition is continued. Therefore, the user does not need to confirm the confirmation screen every time. Therefore, it is possible to reduce a user's burden. In addition, with such a confirmation, the image processing device 100 can notify the user of a misuse of the wrongly-selected form format. Therefore, the user can switch the form format to a correct one. Therefore, it is possible to reduce a processing load for an unnecessary process.

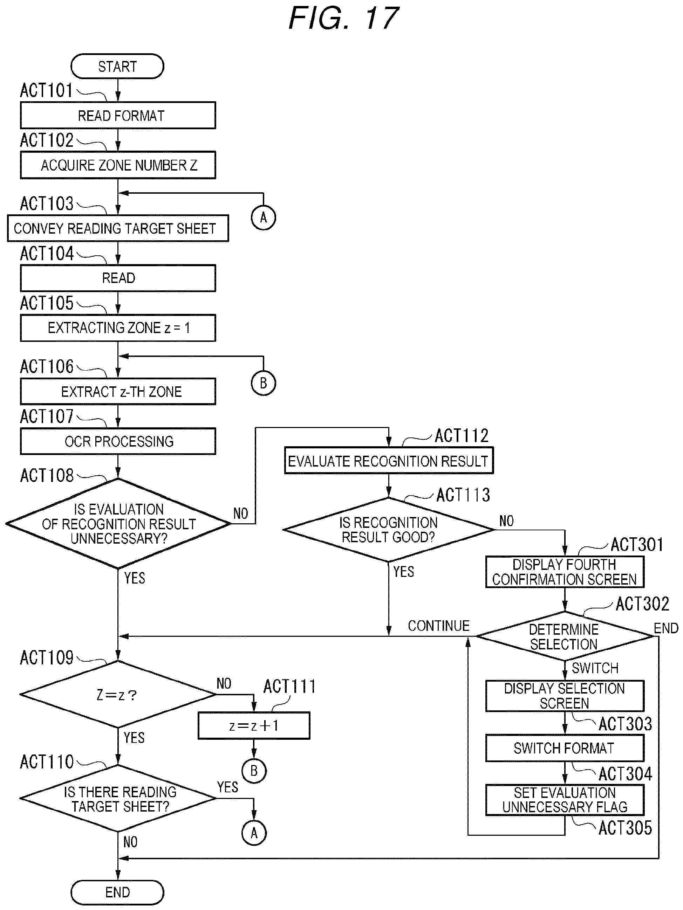

In addition, the image processing device 100 may be configured to perform the recognition illustrated in FIG. 17.

FIG. 17 is a flowchart illustrating a flow of a fourth recognition in the first embodiment. The process of FIG. 17 is performed when the start button 814 is selected in the standby screen 81. In addition, in FIG. 17, the same processes as those of FIG. 11 are denoted with the same numerals as those of FIG. 11, and the description thereof will be omitted.

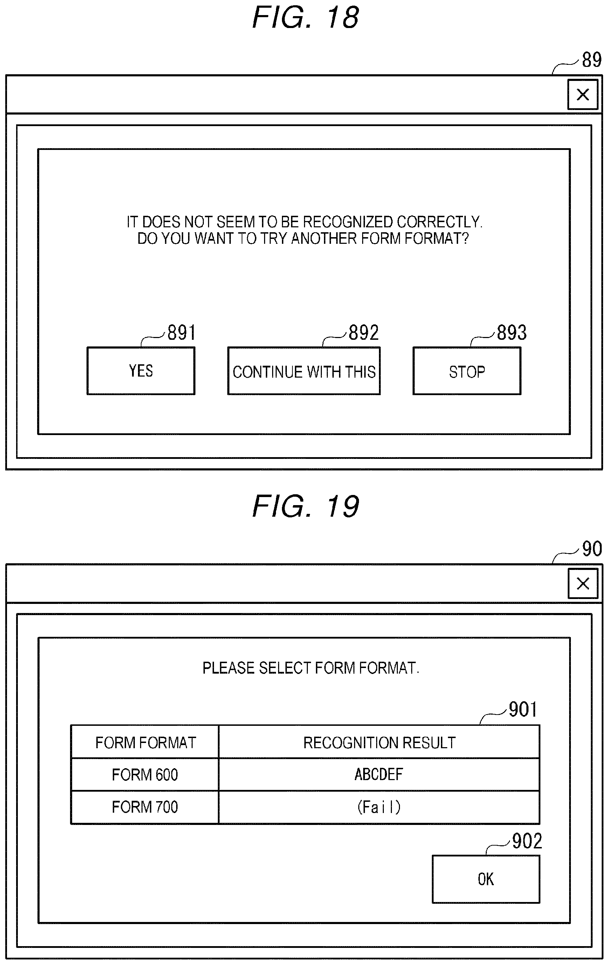

When the recognition result is not good in ACT 113 (ACT 113: NO), the form format selected by the user may be wrong. Therefore, there is a possibility that the character recognition is not accurate. Therefore, the CPU 340 displays the fourth confirmation screen illustrated in FIG. 18 in the display 110 (ACT 301). Specifically, the CPU 340 switches the waiting screen 85 displayed in the display 110 to the fourth confirmation screen to display the fourth confirm screen.

FIG. 18 is a diagram illustrating an example of the fourth confirmation screen 89 in the first embodiment.

The fourth confirmation screen 89 is a screen to confirm whether the recognition is continued when the recognition result is not good. In the fourth confirmation process 89, the notification to the user and a plurality of selection buttons 891 to 893 are displayed. As a notification to the user in the fourth confirmation screen 89, a content is notified to confirm whether another form format is tried when the recognition result is not good.

The selection button 891 is a button to be selected when the other form format is tried.

The selection button 892 is a button to be selected when the recognition is continued using the current form format without trying the other form format.

The selection button 893 is a button to be selected when the recognition is ended.

Returning to FIG. 17, the description will be continued.

The user selects any one of the selection buttons 891 to 893 in the fourth confirmation screen 89 displayed in the display 110. The CPU 340 determines a process corresponding to the selected button when the user selects any one of the selection buttons 891 to 893 (ACT 302). When the selection button 893 is selected, the CPU 340 determines that the recognition is ended (ACT 302: END). In this case, the image processing device 100 ends the process of FIG. 17. Then, the CPU 340 discards the recognition result.

In addition, when the user selects the selection button 892, the CPU 340 determines that the recognition is continued using the current form format without trying the other form format (ACT 302: Continue). The CPU 340 switches the fourth confirmation screen 89 displayed in the display 110 to the waiting screen 85 to display the waiting screen 85. Thereafter, the image processing device 100 performs the subsequent processes after ACT 109.

In addition, when the user selects the selection button 891, the CPU 340 determines that the other form format is tried (ACT 302: Switch). In this case, the CPU 340 performs the recognition using all the form formats which are stored in the auxiliary storage device 320. For example, the CPU 340 performs the recognition with the OCR on the region of the first zone which is designated in each form format among the regions of the image information. The CPU 340 generates screen data of a selection screen which includes the recognition result obtained by each form format as a list. Then, the CPU 340 displays the generated selection screen in the display 110 (ACT 303).

FIG. 19 is a diagram illustrating an example of a selection screen 90 in the first embodiment.

The selection screen 90 is a screen to select a form format. In the selection screen 90, the notification to the user, a list 901 of the recognition results obtained by the respective form formats and an OK button 902 are displayed. As a notification to the user in the selection screen 90, the content of selecting a form format is notified.

In the list 901 of the recognition results, the recognition results obtained by the respective form formats are displayed. "Fail" in the list 901 of the recognition results indicates that the recognition result is not obtained.

The OK button 902 is a button to be used when the user completes the selection of a form format. In other words, when the OK button 902 is selected, the CPU 340 determines that the user selects a form format.

Returning to FIG. 17, the description will be continued.

With the recognition result displayed in the list 901 of the recognition results, the user selects the form format to use. The CPU 340 switches the form format to the selected form format (ACT 304). Specifically, the CPU 340 reads the form format selected by the user from the auxiliary storage device 320. Then, the CPU 340 switches the form format by using the read form format. After switching the form format, the CPU 340 sets the evaluation unnecessary flag (ACT 305). The CPU 340 switches the selection screen 90 displayed in the display 110 to the waiting screen 85 to display the waiting screen 85. Thereafter, the image processing device 100 performs the subsequent processes after ACT 109.

According to the image processing device 100 configured as above, when the recognition result by the OCR is not good, it is confirmed whether the recognition is continued, and the process corresponding to the confirmed result is performed. At this time, the image processing device 100 allows the user to select whether another form format is tried when the recognition is continued. Therefore, the user can select a better form format from all the form formats by checking the recognition result. Therefore, the user can switch the form format to a correct one. Therefore, it is possible to reduce a processing load for an unnecessary process.

The image processing device 100 may change the confirmation screen to be displayed in the display 110 according to any one of time zones, dates and time, and users. The confirmation screen to be changed is any one of the first confirmation screen 86 to the fourth confirmation screen 89.

### Second Embodiment

The first embodiment describes the configuration in which the image reading and image recognition are performed with one housing. A second embodiment will describe a configuration in which the image reading and the image recognition are performed with different devices.

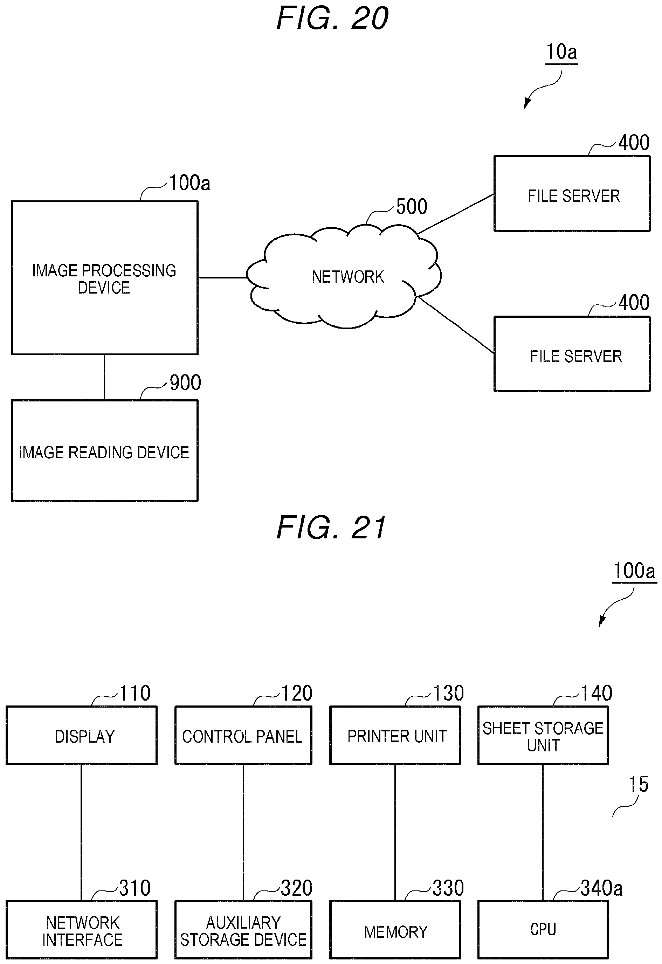

FIG. 20 is a diagram illustrating a configuration of an image processing system 10a according to the second embodiment.

The image processing system 10a includes an image processing device 100a, the file server 400 and an image reading device 900. The image processing device 100a and the file server 400 are connected to be able to communicate with each other through the network 500. In addition, the image processing device 100a and the image reading device 900 are connected in a wired communication manner.

The image processing system 10a is different from the first embodiment in that the image processing device 100a is not provided with a function of reading an image and the image reading device 900 is newly provided. The other configurations are similar to those of the first embodiment. Hereinafter, the differences will be described.

The image processing device 100a performs the character recognition of a specific region on the form by the OCR using the image information which is obtained from the image reading device 900. Then, the image processing device 100a controls the operation of the character recognition according to the character recognition result. In addition, the image processing device 100a transmits the character recognition result to the file server 400 through the network 500.

The image reading device 900 reads a reading target image as brightness and darkness of light. The image reading device 900 transmits the read image information to the image processing device 100a. The image reading device 900 is, for example, an auto document feeder. Further, the image reading device 900 may read an image printed in the reading target form which is set in the document reading table. The image reading device 900 reads the placed form one by one, reads the image described on the taken-out form to generate digital data, and generates image information.

FIG. 21 is a block diagram illustrating a hardware configuration of the image processing device 100a according to the second embodiment.

The image processing device 100a includes the display 110, the control panel 120, the printer unit 130, the sheet storage unit 140, the network interface 310, the auxiliary storage device 320, the memory 330 and the CPU 340a.

The image processing device 100a is different from the image processing device 100 in that a CPU 340a is provided instead of the CPU 340. The other configurations of the image processing device 100a are similar to those of the image processing device 100. Therefore, the entire explanation of the image processing device 100a will be omitted and the CPU 340a will be described.

The CPU 340a controls the operations of the respective units of the image processing device 100a. The CPU 340a loads a software program stored in the auxiliary storage device 320 onto the memory 330 and performs a process by executing the software program. Herein, the specific process of the CPU 340a will be described with an example. The CPU 340a recognizes the character of a specific region of the image information obtained from the image reading device 900 by the OCR using the form format. Then, the CPU 340a controls the operation of the character recognition according to the character recognition result.

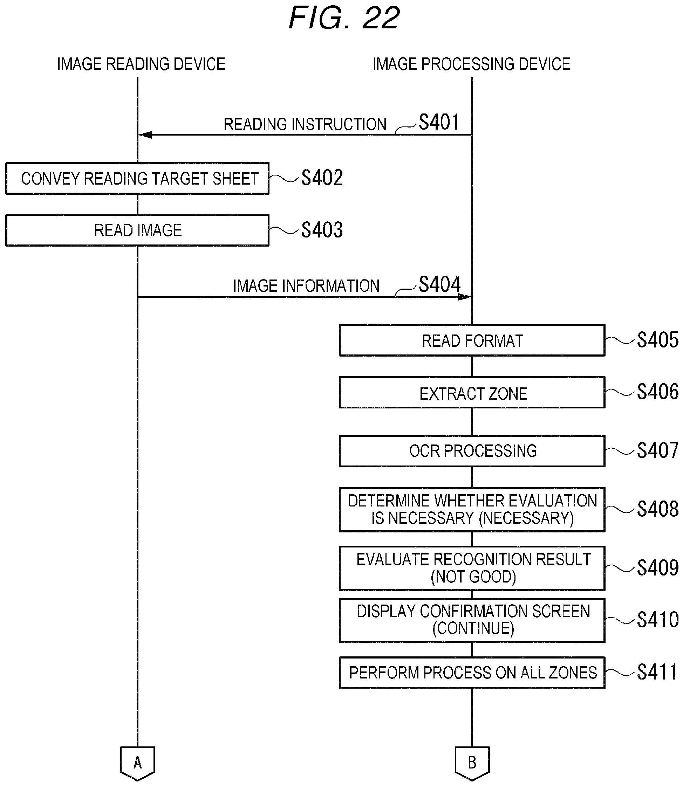

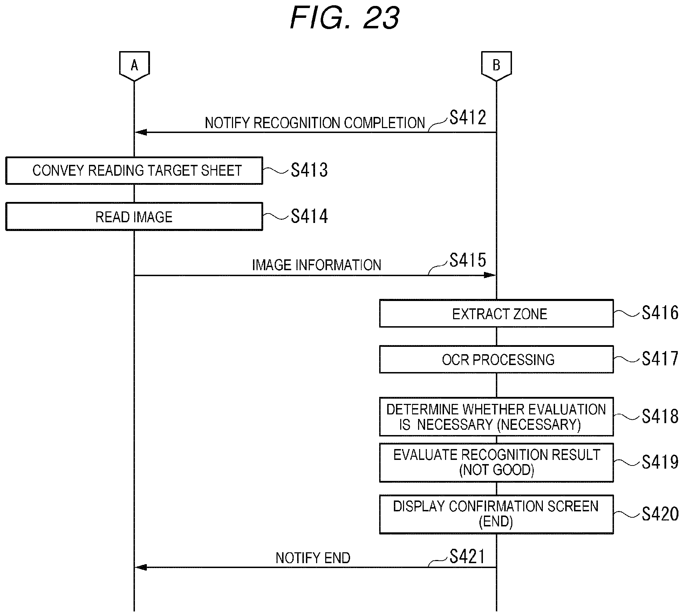

FIGS. 22 and 23 are sequence diagrams illustrating the flow of the process of the image processing system 10a according to the second embodiment. The processes of FIGS. 22 and 23 are performed when the start button 814 is selected in the standby screen 81.

When the start button 814 is selected, the CPU 340a generates a reading instruction to instruct the reading of the form. The CPU 340a transmits the generated reading instruction to the image reading device 900 through the network interface 310 (ACT 401).

The image reading device 900 receives the reading instruction which is transmitted from the image processing device 100a. The image reading device 900 controls the roller according to the reception of the reading instruction and conveys one piece of the installed form (ACT 402). The image reading device 900 optically reads the conveyed form to generate the image information (ACT 403). The image reading device 900 transmits the generated image information to the image processing device 100a (ACT 404).

The network interface 310 receives the image information transmitted from the image reading device 900. The network interface 310 outputs the received image information to the CPU 340a. The CPU 340a reads the form format selected in the standby screen 81 from the auxiliary storage device 320 (ACT 405). The CPU 340a acquires the number of zones Z from the read-out form format. In addition, the CPU 340a initializes the extracting zone z to "1".

The CPU 340a acquires the region information of the z-th zone from the read-out form format. For example, the CPU 340a acquires the region information of the first zone from the read-out form format. From the image information output from the image reading device 900, the CPU 340a extracts information within the region specified by the acquired region information (ACT 406).

The CPU 340a recognizes the character by the OCR from the information within the extracted region (ACT 407). The CPU 340a acquires the character information in the region as a result of the character recognition. The CPU 340a temporarily stores the acquired recognition result in the memory 330. Further, when there is no information in the extracted region, that is, when the region is empty, the CPU 340a acquires nothing. The CPU 340a determines whether the evaluation of the recognition result is necessary (ACT 408). Herein, it is assumed that it is determined that the evaluation is necessary. The determination on whether the evaluation of the recognition result is necessary is similar to that of the first embodiment.

In this case, the CPU 340a evaluates the recognition result (ACT 409). It is assumed that the recognition result is not good. In this case, the CPU 340a displays the confirmation screen in the display 110 (ACT 410). Further, a screen from the first confirmation screen to the fourth confirmation screen to be displayed in the display 110 is set in advance. Herein, it is assumed that the first confirmation screen is displayed. In this case, the CPU 340a switches the waiting screen 85 displayed in the display 110 to the first confirmation screen 86 to display the first confirmation screen 86.

The user selects any one of the Yes button 861 and the No button 862 in the first confirmation screen displayed in the display 110. Herein, it is assumed that it is selected to continue the recognition, that is, the Yes button 861 is selected. Thereafter, the CPU 340a switches the first confirmation screen 86 displayed in the display 110 to the waiting screen 85 to display the waiting screen 85.

The CPU 340a performs the recognition on all the zones obtained from the form format (ACT 411). As a result, the recognition on one form is ended. Thereafter, the CPU 340a generates a recognition completion notification indicating that the recognition on one form is ended. The CPU 340a transmits the generated recognition completion notification to the image reading device 900 through the network interface 310 (ACT 412).

The image reading device 900 receives the recognition completion notification transmitted from the image processing device 100a. The image reading device 900 controls the roller again according to the reception of the recognition completion notification and conveys one piece of the installed form (ACT 413). Further, when there is no installed form, the image reading device 900 transmits a notification indicating the fact to the image processing device 100a. The image reading device 900 optically reads the conveyed form to generate the image information (ACT 414). The image reading device 900 transmits the generated image information to the image processing device 100a (ACT 415).

The network interface 310 receives the image information transmitted from the image reading device 900. The network interface 310 outputs the received image information to the CPU 340a. The CPU 340a initializes the extracting zone z to 1.

The CPU 340a acquires the region information of the z-th zone from the form format which is read in ACT 405. From the image information which is output from the image reading device 900, the CPU 340a extracts information within the region specified by the acquired region information (ACT 416).

The CPU 340a recognizes the character by the OCR from the information within the extracted region (ACT 417). The CPU 340a acquires the character information in the region as a result of the character recognition. The CPU 340a temporarily stores the acquired recognition result in the memory 330. Further, when there is no information in the extracted region, that is, when the region is empty, the CPU 340a acquires nothing. The CPU 340a determines whether the evaluation on the recognition result is necessary (ACT 418). Herein, it is assumed that it is determined that the evaluation is necessary.

In this case, the CPU 340a evaluates the recognition result (ACT 419). It is assumed that the recognition result is not good. In this case, the CPU 340a displays the confirmation screen in the display 110 (ACT 420). Herein, it is assumed that the first confirmation screen 86 is displayed. In this case, the CPU 340a switches the waiting screen 85 displayed in the display 110 to the first confirmation screen 86 to display the first confirmation screen 86.

The user selects any one of the Yes button 861 and the No button 862 in the first confirmation screen 86 displayed in the display 110. Herein, it is assumed that the recognition ends, that is, the No button 862 is selected. In this case, the CPU 340a generates an end notification indicating that the recognition is ended. The CPU 340a transmits the generated end notification to the image reading device 900 through the network interface 310 (ACT 421).

The image reading device 900 ends the conveyance of the form according to the reception of the end notification.

According to the image processing system 10a configured as above, the image processing device 100a does not need to perform the reading of the image. In particular, even an image processing device which does not include a device such as the image reading device 900 can confirm whether the recognition is continued and can perform the process corresponding to the confirmed result. By performing such a confirmation, it is possible to notify the user of a misuse of the wrongly-selected form format. Therefore, the user can switch the form format to a correct one. Therefore, it is possible to reduce a processing load for an unnecessary process. In addition, the cost of the image processing device 100a can also be reduced.

Hereinafter, a modification of the image processing device 100a according to the second embodiment will be described.

The image processing device 100a may be modified similarly to the first embodiment.

According to the image processing device 100 of at least one of the embodiments described above, the image recognition within the region defined with the format in the image information is performed using a format selected from a plurality of formats in which a region where the image recognition is performed in the image information obtained by reading the image formed on the sheet is defined. When the result of the image recognition is not good, the control unit provides an output to confirm whether the image recognition is continued. Thus the processing load for an unnecessary process can be reduced.

Some functions of the image processing devices 100 and 100a of the above-described embodiments may be realized by a computer. In this case, a program for realizing the functions is recorded in a computer-readable recording medium. Then, the program recorded in the recording medium where the above-described program is recorded may be read and performed by a computer system to realize the functions. Further, the "computer system" described herein includes hardware such as an operating system or peripheral devices. In addition, the "computer-readable recording medium" refers to a portable medium, a storage device or the like. The portable medium is a flexible disk, a magneto-optical disk, a ROM, a CD-ROM or the like. In addition, the storage device is a hard disk which is built in the computer system. Further, the "computer-readable recording medium" stores the program dynamically during a short time such as a communication line when the program is transmitted through the communication line. The communication line is a network such as the Internet, a telephone line and the like. In addition, the "computer-readable recording medium" may be a volatile memory in a computer system which becomes a server or a client. The volatile memory is to store the program for a certain period of time. In addition, the program may be to realize some functions described above. In addition, the program may be to realize the above-mentioned functions in combination with a program which is already stored in the computer.

While certain embodiments have been described these embodiments have been presented by way of example only, and are not intended to limit the scope of the inventions. Indeed, the novel embodiments described herein may be embodied in a variety of other forms: furthermore various omissions, substitutions and changes in the form of the embodiments described herein may be made without departing from the scope of the inventions. The accompanying claims and their equivalents are intended to cover such forms or modifications as would fall within the scope of the invention.

## Claims

1. An image processing device, comprising:
a control unit configured to perform image recognition in a region defined with a format in image information by using the format selected from a plurality of formats in which a region where the image recognition is performed in the image information obtained by reading an image formed on a sheet is defined, and to provide an output to confirm whether the image recognition is continued when a result of the image recognition is not good.

2. The image processing device according to claim 1, wherein
the control unit determines that the result of the image recognition is not good when there is no recognizing target in a designated region.

3. The image processing device according to claim 1 or 2, wherein
the control unit evaluates the result of the image recognition according to a reliability of the image recognition.

4. The image processing device according to any one of claims 1 to 3, wherein
the control unit determines that the result of the image recognition is not good when the result does not match a regular expression designated with the format.

5. The image processing device according to any one of claims 1 to 4, wherein
the control unit displays in a display device a confirmation screen containing a content that the format is switched to another format when the result of the image recognition is not good.

6. The image processing device according to claim 5, wherein
the display of the confirmation screen includes a plurality of options to select any one of switching the format to the another format, continuing the image recognition and ending the image recognition, and
the control unit performs image recognition of the region designated with the another format when switching to the another format is selected, and displays a result of the image recognition of all the formats where the image recognition is performed in the display device.

7. The image processing device according to claim 6, wherein
the control unit displays the result of the image recognition of all the formats in the display device, and when a user selects any format, switches the currently used format to the selected format and continues the image recognition.

8. The image processing device according to claim 5, wherein
the control unit determines whether the image recognition is performed on all the regions designated with the format when there is a flag indicating that confirmation of the result of the image recognition is not necessary, and displays the result in the display device whenever the image recognition is performed on the region designated with the format when there is no flag indicating that confirmation of the result of the image recognition is not necessary.

9. An image processing system, comprising:
an image reading device configured to generate image information by reading an image formed on a sheet, and
an image processing device configured to acquire the image information generated by the image reading device through a network, to perform image recognition in a region defined with a format in the image information by using the format selected from a plurality of formats in which a region where the image recognition is performed in the obtained image information is defined, and to output a notification for confirming whether the image recognition is continued when the result of the image recognition is not good.

10. The image processing system according to claim 9, wherein
the image processing device determines that the result of the image recognition is not good when there is no recognizing target in a designated region.

11. The image processing system according to claim 9 or 10, wherein
the image processing device evaluates the result of the image recognition according to a reliability of the image recognition.

12. The image processing system according to any one of claims 9 to 11, wherein
the image processing device determines that the result of the image recognition is not good when the result does not match a regular expression designated with the format.

13. The image processing system according to any one of claims 9 to 12, wherein
the image processing device displays in a display device a confirmation screen containing a content that the format is switched to another format when the result of the image recognition is not good.

14. The image processing system according to claim 13, wherein
the display of the confirmation screen includes a plurality of options to select any one of switching the format to the another format, continuing the image recognition and ending the image recognition, and
the image processing device performs image recognition of the region designated with the another format when switching to the another format is selected, and displays a result of the image recognition of all the formats where the image recognition is performed in the display device.

15. A non-transitory recording medium which is configured to store a computer program to cause a computer to serve as the image processing device according to any one of claims 1 to 8.
